(19) Europäisches Patentamt
European Patent Office
Office européen des brevets

(11) Veröffentlichungsnummer: **0 455 116 B1**

# (12) EUROPÄISCHE PATENTSCHRIFT

(45) Veröffentlichungstag der Patentschrift: **07.12.94**

(51) Int. Cl.[5]: **C08L 33/06**, C08L 33/12, //(C08L33/06,55:02,69:00), (C08L33/12,55:02,69:00)

(21) Anmeldenummer: **91106561.3**

(22) Anmeldetag: **24.04.91**

## (54) Thermoplastisch verarbeitbare Polymermischungen auf Polymethacrylat-Basis mit ABS- und Polycarbonat-Zumischungen.

(30) Priorität: **28.04.90 DE 4013700**

(43) Veröffentlichungstag der Anmeldung:
**06.11.91 Patentblatt 91/45**

(45) Bekanntmachung des Hinweises auf die Patenterteilung:
**07.12.94 Patentblatt 94/49**

(84) Benannte Vertragsstaaten:
**AT BE CH DE DK ES FR GB IT LI NL SE**

(56) Entgegenhaltungen:
**DE-A- 3 238 228**

**WPI, FILE SUPPLIER, AN=74-85000V, Derwent Publications Ltd, London, GB;& JP-A-49 041 441**

(73) Patentinhaber: **RÖHM GMBH**
**Kirschenallee**
**D-64293 Darmstadt (DE)**

(72) Erfinder: **Fischer, Jens-Dieter, Dr.**
**Ernst-Ludwig-Weg 44**
**W-6101 Bickenbach (DE)**
Erfinder: **Blass, Rudolf**
**Jakob-Jung-Strasse 32**
**W-6100 Darmstadt (DE)**
Erfinder: **Numrich, Uwe**
**Sudetenstrasse 1**
**W-6108 Weiterstadt (DE)**
Erfinder: **Siol, Werner, Dr.**
**Goerdelerweg 17**
**W-6100 Darmstadt-Eberstadt (DE)**

EP 0 455 116 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft Polymermischungen von Polymethacrylaten und ABS-Polymerisaten mit verbesserten thermischen und mechanischen Eigenschaften, welche thermoplastisch verarbeitbare Hochleistungs-Werkstoffe sind.

Stand der Technik

Polymethacrylate, sowohl Methylmethacrylat-Homopolymere als auch -Copolymere und Acrylnitril-Butadien-Styrol-(ABS)-Polymerisate finden als thermoplastisch verarbeitbare Kunststoffe große technische Verwendung. Auch Mischungen dieser beiden Polymerarten sind technisch interessante Kombinationen und könnten weitere interessante und brauchbare Mischungen ergeben, wenn bestimmte thermische Eigenschaften, wie die Erweichungstemperatur, und mechanische Eigenschaften, vor allem die Kerbschlagzähigkeit, verbessert wären. Bedarf für solche Kunststoffe besteht beispielsweise für die Herstellung hoch beanspruchter Formteile, wie sie vor allem im Fahrzeugbau gebraucht werden.

Aus der DE-C-12 63 295 sind thermoplastische Formmassen bekannt, die Gemische von Polymeren sind, und zwar von im wesentlichen eines ABS-Polymerisates mit untergeordneten Mengen eines Polymethylmethacrylates oder eines Copolymerisates mit mindestens 70 Gewichtsprozent Methacrylsäuremethylester.

In der EP-B 0 037 686 sind thermoplastische Mischungen bestehend aus einem elastomeren Schlagfestigkeitsmodifizierungs-Polymeren, z.B. einem ABS-Polymeren, nebst einem weiteren polymeren Hilfsmittel, und einem oder mehreren steifen Matrixpolymeren, wie beispielsweise Methylmethacrylat-Homopolymeren und -Copolymeren oder Polycarbonat ohne nähere Angaben beansprucht.

Mischungen eines styrolreichen Copolymerisates mit ABS- und/oder AMBS-Polymeren und Polycarbonat sind in der EP-A 0 135 492 beschrieben.

In der DE-A-32 38 228 wird eine thermoplastische Formmasse beansprucht, die ein Polycarbonat-Harz, ein Copolymeres aus Acrylnitril, Butadien und einer alkenylaromatischen Verbindung, wie Styrol, also ein ABS-Polymerisat, und ein $C_1$- bis $C_5$-Acrylat- bzw. Methacrylat-Interpolymeres umfaßt. Die Formmasse enthält in überwiegender Menge Polycarbonat und in geringen Anteilen das Acrylat-/Methacrylat-Interpolymere, d.h. ein auf Acrylatkautschuk aufgepfropftes Methacrylatpolymer.

Die US-A-4 677 162 beschreibt eine thermoplastische Formmasse aus Polycarbonat-Harz, einem ABS-Polymerisat und einem Schlagzähmodifier auf Basis Acrylkautschuk.

Der angegebene Stand der Technik zeigt, daß die bekannten Mischungen dieser Art immer hohe Anteile an Styrol-reichen Polymerisaten und/oder hohe Anteile an Polycarbonat enthalten, wodurch diese Polymermischungen technische Massen mit schlechter Witterungsstabilität, und bei hohen Polycarbonatanteilen darüber hinaus mit schlechter Fließfähigkeit und damit relativ hoher Verarbeitungstemperatur, darstellen.

Aufgabe und Lösung

Der vorliegenden Erfindung lag die Aufgabe zugrunde, bei Polymermischungen aus vorwiegend Polymethylmethacrylat bzw. entsprechenden Methylmethacrylatcopolymeren und ABS-Polymerisaten, die solchen Mischungen Schlagzähigkeiten verleihen, Wärmeformbeständigkeit und gleichzeitig Schlagzähigkeit, und besonders Kerbschlagzähigkeit, zu verbessern, und die als Formmassen verarbeitbar bleiben.

Gegenstand der Erfindung sind thermoplastische Formmassen von Polymermischungen aus

A) 50 bis 90 Gew.-% Polymethylmethacrylat oder Copolymerisaten von
   - a1) 50 bis 100 Gew.-% Alkyl- bzw. Arylmethacrylat und/oder Alkyl- bzw. Arylacrylat mit $C_1$- bis $C_{10}$-Alkyl-,Cycloalkyl- oder Arylesterresten
   - a2) 0 bis 20 Gew.-% weiteren Acryl- bzw. Methacrylsäure- und Maleinsäureverbindungen
   - a3) 0 bis 50 Gew.-%, gegebenenfalls substituierten, Vinylaromaten

B) 5 bis 40 Gew.-% von Copolymerisaten mit Polybutadien als Zähphasenbestandteil

C) 5 bis 40 Gew.-%

c1) Polycarbonat mit der Struktureinheit I

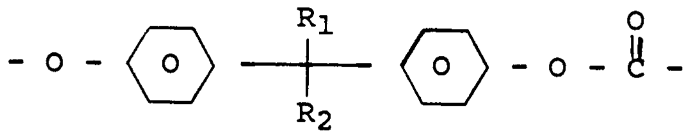

I

worin $R_1$ und $R_2$ = H,
$C_1$-$C_6$-Alkyl
$C_6$-$C_{12}$-Aryl bzw. Aralkyl bedeuten,
und/oder

c2) Polycarbonat-Cokondensaten, bestehend aus 5 bis 95 Gew.-% der Struktureinheit I und 95 bis 5 Gew.-% o- und/oder p-Phthalsäure-Bisphenol-Bausteinen

D) 0 bis 20 Gew.-% eines Schlagzähmodifizierungsmittels aus

d1) 90 bis 20 Gew.-% eines gegebenenfalls vernetzten Polymeren P mit einer Glastemperatur Tg < 10 Grad C, bevorzugt <-10 Grad C, das wenigstens teilweise kovalent verknüpft ist mit

d2) 10 bis 80 Gew.-% eines Polymeren der Formel II

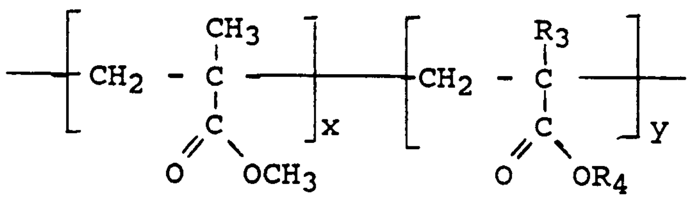

II

worin $R_3$ für H oder $CH_3$ und $R_4$ für einen gegebenenfalls substituierten Cycloalkylrest mit 5 bis 7 C-Atomen oder einen Arylrest mit 6 bis 12 C-Atomen stehen, und x und y sich - gegebenenfalls mit weiteren in Mengen von 0 bis 20 Gew.-% vorhandenen Monomeren - zu 100 Gew.-% ergänzen, mit der Maßgabe, daß y einen Bereich von 0 bis 50 Gew.-% bezeichnet.

So zusammengesetzte Polymermischungen sind schlagzähmodifizierte Formmassen mit Poly(meth)-acrylatanteilen von 50 bis 90 Gew.-%. Die Wärmeformbeständigkeit dieser Mischungen liegt je nach Polycarbonatgehalt bzw. Polycarbonat-Cokondensat-Gehalt um 10 - 15 K über den Werten für z.B. Polymethylmethacrylat (PMMA)/ABS-Verschnitten. Schlagzähigkeiten und Kerbschlagzähigkeiten sind in den erfindungsgemäß verbesserten Produkten wesentlich erhöht. Zur Herstellung der erfindungsgemäßen Polymerblends lassen sich Recycling-Komponenten, teilweise oder ausschließlich, einsetzen. Überraschenderweise weisen erfindungsgemäße Formmassen aus Neuwaren oder Recycling-Komponenten praktisch gleiche Eigenschaftswerte auf.

Die Blendkomponenten - PMMA bzw. MMA-Copolymerisate, ABS, Polycarbonat (PC) - fallen als solche oder auch als Mischungen, wie beispielsweise PC/ABS-Mischungen, bei Abfallaufbereitungen an. PC/ABS-Mischungen werden als Hochleistungswerkstoffe z.B. im Fahrzeugbau zur Herstellung von Stoßfängern oder für andere mechanisch hochbeanspruchbare Teile eingesetzt. Ein Problem stellt das Recycling dieser Blends dar, denn die relativ hohen Verarbeitungstemperaturen als Formmassen (260 - 300 Grad C) bedingen einen Abbau des Polycarbonats und in gewissem Maße auch des ABS.

Die Verarbeitungstemperatur wird durch die Fließfähigkeit der Mischungen vorgegeben. Mischungen wie sie der Erfindung entsprechen, bereiten durch den hohen PMMA- bzw. (Meth)-Acrylat-Copolymerisat-Gehalt infolge ihrer guten Fließfähigkeit bei Verarbeitungstemperaturen zu Formlingen keine Schwierigkeiten. Diese Formlinge, die besonders vorteilhaft unter Verwendung von Recycling-Materialien hergestellt werden, können als technische Formteile z.B. im Fahrzeugbau, dort beispielswiese als Teile von Lampengehäusen, oder für Gerätegehäuse dienen.

## Durchführung der Erfindung

Die einzelnen Bestandteile der erfindungsgemäßen Polymermischungen sind für sich bekannte Polymerisate, die technisch vorwiegend als Formmassen verwendet werden.

Die Komponente A, die mengenmäßig mit 50 bis 90 Gew.-%, bevorzugt 50 bis 75 Gew.-% den Hauptanteil der neuen Formmasse ausmacht, ist eine Polymethacrylat-Formmasse. Diese besteht entweder nur aus Polymethylmethacrylat oder aus Copolymerisaten von Methylmethacrylat mit etwa 2 bis 20 Gew.-% weiterer Acrylsäure- und/oder Methacrylsäure-$C_1$-$C_{10}$-alkyl-, -cycloalkyl- oder -arylestern. Als Komponente A kommen aber auch weitere Copolymerisate des Methylmethacrylats in Frage, die mit weiteren Comonomeren, insbesondere weiteren Acrylsäure- bzw. Methacrylsäurederivaten, wie beispielsweise Acrylnitril, Methacrylnitril, Acrylamid, Methacrylamid, deren funktionellen Derivaten wie z.B. 2-Hydroxyethyl(meth)-acrylsäureester, oder Maleinsäureverbindungen, vor allem mit Maleinsäureanhydrid oder Maleinsäureimiden hergestellt wurden, wobei entsprechend a2) diese in Mengen von 0 bis 20 Gew.-% in den Copolymerisationen A) vorhanden sind.

Diese Copolymerisate können, wie in a3) angegeben, auch 0 bis 50 Gew.-%, gegebenenfalls substituierte, Vinylaromaten als Monomerbausteine enthalten. Vor allem sind dies dann Copolymerisate mit Styrol, p-Methylstyrol und $\alpha$-Methylstyrol als Comonomeren. Die Komponente A kann so z.B. eine technische Formmasse, bestehend aus 75 Gew.-% Methylmethacrylatbausteinen, 10 Gew.-% Maleinsäureanhydridbausteinen und 15 Gew.-% Styrolbausteinen sein, die mit einer Vicat-Erweichungstemperatur von 120 Grad C (gemessen nach DIN 53 460) in die erfindungsgemäßen thermoplastischen Massen ihre relativ hohe Wärmeformbeständigkeit mit einbringt.

Die Herstellung der Polymethacrylat-Komponente A erfolgt in bekannter Weise durch Polymerisation des bzw. der Monomeren in Substanz, in Lösung oder in Dispersion. Durch Zusätze von Reglern, vor allem vor Schwefelreglern, insbesondere den Mercaptanen, werden die Molekulargewichte der Polymethacrylate so eingestellt, daß sie als thermoplastische Formmassen verarbeitbar sind. (Kunststoff-Handbuch, Band IX, Polymethacrylate, Carl Hanser Verlag München 1975, Seiten 22 bis 37).

Die Komponente B) mit einem Anteil von 5 bis 40 Gew.-%, bevorzugt 10 bis 30 Gew.-%, am Aufbau der erfindungsgemäßen Blends beteiligt, sind Copolymerisate mit Polybutadien als Zähphasenbestandteil. Diese sind als ABS-Polymerisate wohlbekannt. Zu der von den bevorzugten Copolymerisaten aus Acrylnitril-Butydien-Styrol abgeleiteten ABS-Polymerfamilie gehören auch noch ABS-analoge Systeme, insbesondere MBS- und MABS-Polymerisate, die als Komponente B) in den erfindungsgemäßen Polymermischungen die Grundzähigkeit der Massen des Standes der Technik, nämlich von "ABS"-Polymerisat/Polymethacrylat-Mischungen, bestimmen. MBS- bzw. MABS-Polymerisate sind Zweiphasensysteme bei denen Methylmethacrylat-Styrol- bzw. Methylmethacrylat-Acrylnitril-Styrol-Copolymerisate als Pfropfäste auf Polybutadien verankert sind. Die Herstellung solcher ABS-Formmassen ist nach verschiedenen bekannten Verfahren möglich. Das bevorzugte Herstellungsverfahren ist die Emulsionspolymerisation. (Ullmann's Encyklopädie der technischen Chemie, 4. Auflage, Band 19, Seiten 277 bis 293).

Mit der Komponenten C) in Anteilen von 5 bis 40 Gew.-%, bevorzugt 15 bis 35 Gew.-%, in der Mischung werden die erfindungsgemäßen Eigenschaftsverbesserungen der bekannten Polymethacrylat-ABS-Mischungen, insbesondere Verbesserungen in der Wärmeformbeständigkeit und in den Schlagzähigkeiten, erreicht. Die bevorzugte Komponente C) ist ein aromatisches Polycarbonat c1) mit der Struktureinheit I. Thermoplastische, aromatische Polycarbonate mit hohem Molekulargewicht, die erfindungsgemäße Mischungsbestandteile sind, sind die der Formel I entsprechenden Homopolycarbonate und Copolycarbonate, und Mischungen daraus, und die Molekulargewichte von etwa 10 000 bis etwa 200 000 Dalton, vor allem von etwa 20 000 bis 80 000 Dalton haben. Solche Polycarbonate sind wohlbekannt und im Handel erhältlich. Als zweiwertige Phenole zur Herstellung der aromatischen Polycarbonate dienen vor allem 2,2-Bis(4-hydroxyphenyl)-propan und Bis(4-hydroxyphenyl)-methan. Auch halogensubstituierte Bisphenole können zur Herstellung der aromatischen Polycarbonate mitverwendet worden sein. Sie dienen vor allem der Herabsetzung der Brennbarkeit der Polycarbonate und damit auch als solche in den erfindungsgemäßen Mischungen. Halogensubstituierte brauchbare Bisphenole sind vor allem 2,2-Bis-(3,5-dichlor-4-hydroxyphenyl)-propan und 2,2-Bis-(3,5-dibrom-4-hydroxyphenyl)-propan.

Die in der vorliegenden Erfindung eingesetzte Komponente C) schließt als c2) auch die polymeren Derivate eines zweiwertigen Phenols mit wechselnden Mengen Kohlensäure und aromatischen Carbonsäuren, insbesondere von o- und/oder p-Phthalsäure (Terephthalsäure), ein. Diese als Polyestercarbonate technisch verfügbaren, transparenten Thermoplaste werden beispielsweise wie in der US-A-3 169 121 beschrieben, hergestellt.

Bisphenolpolycarbonate mit der Struktureinheit I sind beispielsweise unter der Bezeichnung MAKROLON®, und Polyestercarbonate sind beispielsweise unter der Bezeichnung APEC® im Handel erhältliche Produkte. Auch die Komponente C) wird zur Herstellung der erfindungsgemäßen Massen, wie die Komponenten A) und B), bevorzugt als Recycling-Ware eingesetzt.

Für die weitere Verbesserung der Schlagzähigkeit der erfindungsgemäßen Blends wird gegebenenfalls ein Schlagzähmodifizierungsmittel D) in Mengen von 0 bis 20 Gew.-%, bezogen auf das Gesamtgewicht

von A) + B) + C) + D), zugesetzt. Schlagzäh-Modifizierungsmittel der unter D) definierten Art bestehen aus einem Elastomeren P mit einer Glastemperatur unter 10 Grad C, bevorzugt unter -10 Grad C, und das kovalent mit einem Methacrylat-(Co)polymerisat, das vorzugsweise mit bestimmten Comonomeren hergestellt ist, verbunden ist. Solche Schlagzäh-Modifizierungsmittel sind beschrieben in EP-A 0 321 878 und EP-A 0 326 938.

Die Art der Herstellung der erfindungsgemäßen Polymermischungen ist herkömmlich (s. Ullmanns Encyclopädie der technischen Chemie, 4. Auflage, Band 15, S. 281 - 285). Man gelangt zu der beanspruchten Mischung, in dem man von den Einzelkomponenten A), B) und C), sowie gegebenenfalls D) ausgeht, oder man geht von Mischungen von A) mit B) oder von A) mit C) oder von B) mit C) aus, die gegebenenfalls auch schon die Komponente D) mitenthalten können. Vorteilhafterweise und vorzugsweise werden Recycling-Stoffe dazu eingesetzt. Nach mechanischer Vormischung der granulierten Komponenten, läßt man ein solches Gemisch beispielsweise einen Extruder oder einen Walzkneter passieren, wobei eine Mischung der erfindungsgemäßen Art erhalten wird. Diese gemischte Zubereitung kann abgekühlt und dann zu Granulat geschnitten werden, das dann als Formmasse weiterverwendet wird.

Die hervorragenden Eigenschaften der erfindungsgemäßen Blends sollen in den folgenden Beispielen aufgezeigt werden. Die Vicat-Erweichungstemperatur (VST) ist nach DIN 53 460 bzw. ISO 306 und die Schlagzähigkeit und Kerbschlagzähigkeit sind nach ISO 179 bzw. DIN 53 453 bestimmt. Ein Maß für die Fließbarkeit und damit für die Verformbarkeit ist die Schmelzviskosität. Sie wird bestimmt nach DIN 54 811 .

BEISPIELE

Beispiele 1 - 4

Die in der nachfolgenden Tabelle angeführten Mischungen wurden aus den Mischungskomponenten auf einem 35 mm-Storck-Mischextruder bei 210 - 240 Grad C compoundiert und granuliert, der Spritzguß erfolgte auf einer Battenfeld-Spritzgießmaschine BA 350-CE bei 240 Grad C.

Als Mischungskomponenten wurden Polycarbonat MAKROLON® 3103 bzw. 1143 (Bayer) und Acrylnitril-Butadien-Styrol-Terpolymer (TERLURAN® 877T (BASF)), die mindestens schon zweimal thermoplastisch verarbeitet worden waren (Regranulate), sowie Polymethylmethacrylat PLEXIGLAS® Y8N bzw. Y7N (Granulat, Röhm) als Neuwaren eingesetzt.

Die Mischungen weisen im Vergleich zu PMMA/ABS-Mischungen (Vergleichsbeispiel 4) deutlich höhere Wärmeformbeständigkeit und Kerbschlagzähigkeiten auf. Die Erhöhung der Schmelzviskosität und damit die Verringerung der Fließfähigkeit (Melt Flow Index, MFI) ist demgegenüber nur geringfügig (eine Erhöhung der Schmelztemperatur von 5 - 10 K reduziert die Schmelzviskosität um ca. 50 % und damit auf das Niveau des Vergleichsbeispiels 4).

| Blend / Eigenschaft | Komponente | Beispiel 1 | Beispiel 2 | Beispiel 3 | Beispiel 4 (Vergleich) |
|---|---|---|---|---|---|
| | Polymethacrylat | 50 % Y8N | 50 % Y7N | 50 % Y8N | 70 % Y8N |
| | ABS | 20 % | | | 30 % ABS |
| | PC | 30 % Makrolon 3103 | | Makrolon 1143 | |
| Vicat-B (Grad C) DIN 53460 | | 115 | 112 | 115 | 102 |
| Schlagzähigkeit ($kjm^{-2}$) ISO 179/1D 23 Grad C | | 71 | 89 | o. Bruch | - |
| -10 Grad C | | 82 | 81 | o. Bruch | - |
| Kerbschlagzähigkeit ($kjm^{-2}$) ISO 180/1A 23 Grad C | | 5.1 | 4.7 | 5.4 | 2.8 |
| -10 Grad C | | 3.5 | 3.4 | 3.0 | - |
| Schmelzviskosität/5N (Pa s) DIN 54811 220 Grad C | | 3 710 | 2260 | 3 750 | 2050 |
| 240 Grad C | | 820 | - | - | - |
| 260 Grad C | | 330 | - | - | - |
| MFI (230 Grad C, 3,8 kg) DIN 53735 | | 2.0 | - | - | 2.5 |

Beispiele 5 - 8

Wie in den Beispielen 1 - 4 wurden nachfolgend angeführte Mischungen auf einem Breyer-Mischextruder compoundiert und granuliert sowie hiernach auf einer Battenfeld-Spritzgußmaschine spritzgegossen.

In Beispiel 5 sind die Eigenschaften einer Mischung aus Neuware-Materialien aufgeführt. Die Beispiele 6 und 7 beschreiben Blends, die ein Schlagzäh-Modifizierungsmittel auf Basis Butylacrylat enthalten (Suspensions-Polymerisat PLEXIGLAS® zk50), wobei in Beispiel 6 alle Komponenten als Neuwaren und in Beispiel 7 die ABS- und PC-Komponenten als Regranulate eingesetzt wurden. Ein Blend mit niedrigeren Polycarbonat-Anteilen ist in Beipsiel 8 beschrieben.
Der Vergleich zwischen den Beipsielen 1,3 und 5 zeigt, daß keine signifikanten Unterschiede zwischen Blends aus Recycling-Materialien und Neuware-Materialien bestehen. Durch den Zusatz weiterer Schlagzäh-Modifizierungsmittel läßt sich die Kerbschlagzähigkeit nochmals um ca. 10 - 20 % verbessern (Vergleich Beispiele 1 - 3 mit 6 und 7).

| Blend / Eigenschaft | Komponente | Beispiel 5 | Beispiel 6 | Beispiel 7 | Beispiel 8 |
|---|---|---|---|---|---|
| | Polymethacrylat | 50 % Y8N | | | 65 % Y8N |
| | ABS | 20 % | | | |
| | PC | 30 % Makrolon 3103 | 25 % Makrolon 3103<br>5 % Plexiglas zK50 | | 15 % Makrolon 3103 |
| Vicat-B (Grad C) DIN 53460 | | 116 | 116 | 114 | 113 |
| Schlagzähigkeit ($kjm^{-2}$)<br>ISO 179/1D 23 Grad C | | - | o. Bruch | o. Bruch | 63 |
| -20 grad C | | - | 85 | 81 | 45 |
| Kerbschlagzähigkeit ($kjm^{-2}$)<br>ISO 180/1A 23 Grad C | | 5.3 | 6.1 | 5.7 | 2.9 |
| -20 Grad C | | 3.9 | 3.5 | 3.7 | 2.3 |
| Schmelzviskosität/5N (Pa s)<br>DIN 54811 220 Grad C | | 3 340 | 3 670 | 3 500 | 2 520 |

## Patentansprüche

**1.** Thermoplastische Formmassen von Polymermischungen aus

A) 50 bis 90 Gew.-% Polymethylmethacrylat oder Copolymerisaten von

a1) 50 bis 100 Gew.-% Alkyl- bzw. Arylmethacrylat und/oder Alkyl- bzw. Arylacrylat mit $C_1$ bis $C_{10}$-Alkyl-, Cycloalkyl- oder Arylesterresten
a2) 0 bis 20 Gew.-% weiteren Aryl- bzw. Methacrylsäure- und Maleinsäureverbindungen
a3) 0 bis 50 Gew.-%, gegebenenfalls substituierten, Vinylaromaten
B) 5 bis 40 Gew.-% von Copolymerisaten mit Polybutadien als Zähphasenbestandteil
C) 5 bis 40 Gew.-%
c1) Polycarbonat mit der Struktureinheit I

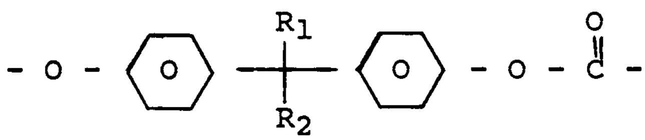 I

worin $R_1$ und $R_2$ = H,
$C_1$-$C_6$ Alkyl,
$C_6$-$C_{12}$ Aryl bzw. Aralkyl
und/oder
c2) Polycarbonat-Cokondensaten, bestehend aus 5 bis 95 Gew.-% der Struktureinheit I und 95 bis 5 Gew.-% o- und/oder p-Phthalsäure-Bisphenol-Bausteinen
D) 0 bis 20 Gew.-% eines Schlagzähmodifizierungsmittels aus
d1) 90 bis 20 Gew.-% eines gegebenenfalls vernetzten Polymeren P mit einer Glastemperatur Tg < 10 Grad C, das wenigstens teilweise kovalent verknüpft ist mit
d2) 10 bis 80 Gew.-% eines Polymeren der Formel II

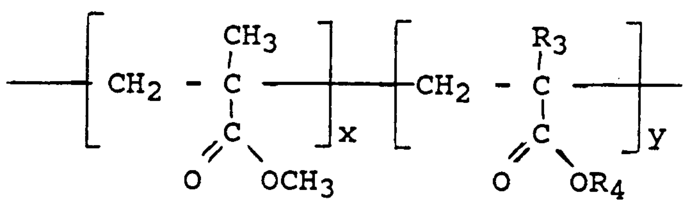 II

worin $R_3$ für H oder $CH_3$ und $R_4$ für einen gegebenenfalls substituierten Cycloalkylrest mit 5 - 7 C-Atomen oder einen Arylrest mit 6 - 12 C-Atomen stehen und x und y sich - gegebenenfalls mit weiteren Mengen von 0 bis 20 Gew.-% vorhandenen Monomeren - zu 100 Gew.-% ergänzen, mit der Maßgabe, daß y einen Bereich von 0 bis 50 Gew.-% bezeichnet.

**2.** Thermoplastische Formmassen von Polymermischungen nach Anspruch 1, dadurch gekennzeichnet, daß diese die Mischungskomponenten A) in Anteilen von 50 bis 75 Gew.-%, B) in Anteilen von 10 bis 30 Gew.-% und C) in Anteilen von 15 bis 35 Gew.-% enthalten.

**3.** Thermoplastische Formmassen von Polymermischungen nach den Ansprüchen 1 und 2, dadurch gekennzeichnet, daß die polymeren Mischungskomponenten A) und/oder B) und/oder C), mit gegebenenfalls D), Recycling-Kunststoffe sind.

## Claims

**1.** Thermoplastic moulding compounds of polymer mixtures containing
A) 50 to 90 wt.% of polymethylmethacrylate or copolymers consisting of
a1) 50 to 100 wt.% of alkyl or arylmethacrylate and/or alkyl or arylacrylate having $C_1$ to $C_{10}$ alkyl, cycloalkyl or aryl ester groups
a2) 0 to 20 wt.% of further aryl or methacrylic acid and maleic acid compounds
a3) 0 to 50 wt.% of optionally substituted vinyl aromatic substances
B) 5 to 40 wt.% of copolymers with polybutadiene as a component of the viscous phase.
C) 5 to 40 wt.% of

c1) polycarbonates with the structural unit I

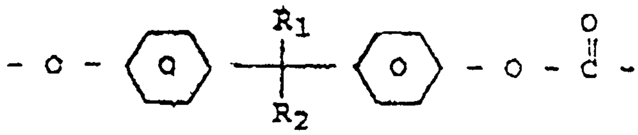

I

wherein $R_1$ and $R_2$ = H, $C_1$-$C_6$ alkyl, $C_6$-$C_{12}$ aryl or aralkyl
and/or

c2) polycarbonate-cocondensates consisting of 5 to 95 wt.% of the structural unit I and 95 to 5 wt.% of o- and/or p-phthalic acid bisphenol units

D) 0 to 20 wt.% of an
impact-resistance modifier consisting of

d1) 90 to 20 wt.% of an optionally cross-linked polymer P having a glass transition temperature Tg < 10 °C, which is at least partially covalently bonded with

d2) 10 to 80 wt.% of a polymer of Formula II

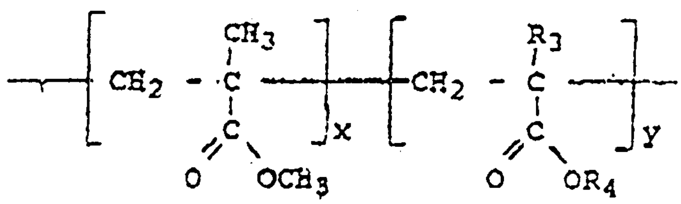

II

wherein $R_3$ represents H or $CH_3$ and $R_4$ represents an optionally substituted cycloalkyl group having 5 to 7 C-atoms or an aryl group having 6 to 12 C-atoms, and x and y, optionally with further monomers present in amounts of 0 to 20 wt.%, make up to 100 wt.%, with the proviso that y represents a range of 0 to 50 wt.%.

**2.** Thermoplastic moulding compounds of polymer mixtures according to Claim 1, characterised in that they contain the mixing components A) in amounts of 50 to 75 wt.%, B) in amounts of 10 to 30 wt.% and C) in amounts of 15 to 35 wt.%.

**3.** Thermoplastic moulding compounds of polymer mixtures according to Claims 1 and 2, characterised in that the polymeric mixing components A) and/or B) and/or C), and optionally D), are recycling plastics.

**Revendications**

**1.** Masses à mouler thermoplastiques de mélanges de polymères, composées de

A) 50 a 90% en poids de polyméthacrylate de méthyle ou de copolymères de

a1) 50 à 100% en poids de méthacrylate d'alkyle ou d'aryle et/ou d'acrylate d'alkyle ou d'aryle contenant des restes ester d'alkyle en $C_1$-$C_{10}$, de cycloalkyle ou d'aryle,

a2) 0 à 20% en poids d'autres composés d'acide acrylique ou méthacrylique et d'acide maléique,

a3) 0 à 50% en poids de carbures vinylaromatiques éventuellement substitués,

B) 5 à 40% en poids de copolymères contenant du polybutadiène comme constituant de phase dure,

C) 5 à 40% en poids

c1) de polycarbonate contenant le motif structural I

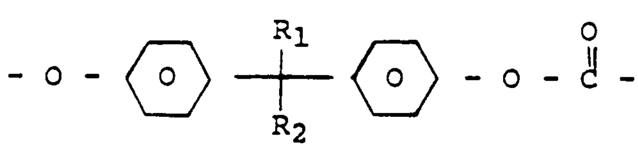

I

où $R_1$ et $R_2$ = H, alkyle en $C_1$-$C_6$, aryle en $C_2$-$C_{12}$ ou aralkyle

et/ou

c2) de produits de co-condensation de polycarbonate, se composant de 5 a 95% en poids du motif structural I et de 95 à 5% en poids d'éléments structuraux acide o- et/ou p-phtalique-bisphénol,

D) 0 à 20% en poids d'un agent de modification de résilience, composé de

d1) 90 à 20% en poids d'un polymère P éventuellement réticulé, qui a une température de transition vitreuse Tg < 10 ° C et qui est enchaîné par liaison covalente, au moins partiellament, à

d2) 10 à 80% en poids d'un polymère de formule II

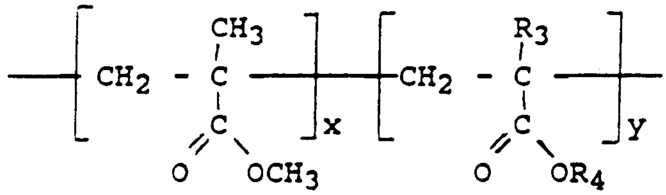

II

où $R_3$ est mis pour H ou $CH_3$ et $R_4$ pour un reste cycloalkyle à 5-7 atomes de carbone éventuellement substitué ou pour un reste aryle à 6-12 atomes de carbone, et où x et y se complètent à 100% en poids - éventuellement avec des quantités supplémentaires de 0 a 20% en poids de monomères présents -, étant spécifié que y désigne une gamme de 0 à 50% en poids.

**2.** Masses à mouler thermoplastiques de mélanges de polymères selon la revendication 1, caractérisées en ce qu'elles contiennent le composant A) du mélange dans des proportions de 50 à 75% en poids, le composant B) dans des proportions de 10 à 30% en poids et le composant C) dans des proportions de 15 à 35% en poids.

**3.** Masses à mouler thermoplastiques de mélanges de polymères selon les revendications 1 et 2, caractérisées en ce que les composants du mélange de polymères A) et/ou B) et/ou C), avec éventuellement D), sont des matières plastiques de recyclage.